# EUROPEAN PATENT SPECIFICATION

(11) **EP 3 534 523 B1**
(45) Date of publication and mention of the grant of the patent: **16.02.2022**
(21) Application number: 18159235.3
(22) Date of filing: 28.02.2018
(51) Int. Cl.: H02M 7/483

(54) **IMPROVEMENTS IN OR RELATING TO HVDC POWER CONVERTERS**
VERBESSERUNGEN AN HGÜ-LEISTUNGSWANDLERN
AMÉLIORATIONS APPORTÉES OU SE RAPPORTANT À DES CONVERTISSEURS DE PUISSANCE À COURANT CONTINU À HAUTE TENSION

(43) Date of publication of application: 04.09.2019
(73) Proprietor: General Electric Technology GmbH, 5400 Baden (CH)
(72) Inventor: ADAMCZYK, Andrzej Grzegorz, Stafford, Staffordshire ST16 1WS (GB); KABUL, Sertkan, Stafford, Staffordshire ST16 1WS (GB)
(74) Representative: Brevalex

(56) References cited:
- WO-A1-2015/024950
- WO-A1-2017/148794
- WO-A2-2011/006796

## Description

This invention relates to a high voltage direct current (HVDC) power converter.

In HVDC power transmission, alternating current (AC) electrical power is converted to high voltage direct current (DC) power for transmission via overhead lines and/or undersea cables. This conversion reduces the cost per kilometre of the lines and/or cables, and is therefore cost-effective when power needs to be transmitted over a long distance. Once the transmitted electrical power reaches its target destination, the high voltage DC electrical power is converted back to AC electrical power before being distributed to local networks.

The conversion of AC power to DC power is also commonly utilized in power transmission networks in circumstances where it is necessary to interconnect two AC networks operating at different frequencies.

HVDC power converters are required at each interface between AC and DC networks to affect the required conversion between AC power and DC power.

Document WO 2011/006796 A2 discloses an HVDC power converter, comprising an inductor electrically connected between each phase node of a limb portion and ground, providing low impedance for DC current, for supporting balancing of DC voltages during normal operation of power converter while AC source remains connected to converter. Document WO 2017/148794 A1 discloses, in figure 1 thereof, an HVDC power converter, comprising an inductor electrically connected between a single phase node of a limb portion and ground, permitting a difference in leakage current to flow through the grounding circuit to ground to support balancing of the DC voltages. Document WO 2015/024950 A1 discloses, in figure 1 thereof, an HVDC power converter and a grounding circuit, wherein an inductor is connected in series with a resistor and a switching element. Closing the switching element provides a path to ground that discharges any remaining AC terminal voltage, and so acts to remove any voltage imbalance between the first and second DC terminals.

According to an aspect of the invention there is provided a HVDC power converter according to claim 1.

The ability to transfer, as desired, energy from one DC transmission conduit to the other DC transmission conduit is beneficial because it can be used to compensate for variations in the power transmission network within which the power converter of the invention is located.

Transferring energy from the DC transmission conduit carrying the higher absolute voltage to one or more transfer inductors reduces the voltage carried by the DC transmission conduit carrying the higher absolute voltage, while transferring energy from the one or more transfer inductors to the DC transmission conduit carrying the lower absolute voltage increases the voltage carried by the DC transmission conduit carrying the lower absolute voltage.

Such energy transfers are therefore advantageous because they allow the transmission conduit voltages to be balanced more quickly than existing solutions which require a complete discharge of the transmission conduit carrying the higher absolute voltage, which is time consuming.

In addition, the voltage carried by each transmission conduit following such energy transfers is close to normal operating levels, and so recovery of the power converter to full power also requires less time than existing solutions.

Optionally the control unit is programmed to operate the power converter in the conduit energy transfer mode following a fault condition in which the voltage carried in use by one DC transmission conduit reduces while the voltage carried by the other DC transmission conduit increases.

Having a control unit programmed in such a manner, permits the power converter to react quickly to, and recover promptly after, such a fault.

The control unit may be programmed when operating the power converter in the conduit energy transfer mode following a fault conduit to, as a first step, block each valve to prevent the transfer of power between the DC and AC networks.

Such a step provides a desired degree of protection to the power converter following the fault condition.

Preferably the control unit is programmed to repeat the first and second operating cycles.

Having the control unit repeat the first and second operating cycles e.g. repeatedly transfer energy from a transmission conduit carrying a higher voltage to a transfer inductor and then from the transfer inductor to a transmission conduit carrying a lower voltage, allows for the use of a smaller capacity, and therefore less expensive, transfer inductor, while still permitting sufficient overall energy transfer from one transmission conduit to the other to achieve balanced voltages on the transmission conduits.

Alternatively, repeating the first and second operating cycles provides the option of varying the direction of energy transfer, i.e. from one DC transmission conduit to the other and then vice versa.

Optionally the or each AC terminal is connected to a first transformer winding of a transformer configured, in use, to connect the power converter to an AC network.

A transfer inductor may extend between a neutral point of the first transformer winding and ground.

Arranging a transfer inductor in either of the foregoing manners avoids the need for separate transfer inductors for each DC transmission conduit.

In addition, having the transfer inductor extending from the neutral point means that the transfer inductor needs only to be insulated at the neutral point level, which is typically one third less than it might otherwise have to be, e.g. if the transfer inductor was connected elsewhere within the power converter.

In a preferred embodiment of the invention at least one transfer inductor takes the form of a dedicated inductance component solely configured to in use handle the transfer of energy between respective DC transmission conduits.

Such an arrangement allows a tailoring of the or each inductance component to the specific energy transfer task, and so allows its inductance value to be optimised according to the rate of energy transfer required for a particular installation.

The or each dedicated inductance component may be arranged in series with a switch, and the control unit may be further programmed while operating the power converter in the conduit energy transfer mode to close the or each switch to place the corresponding inductance component in circuit between the transfer limb portions and ground.

Arranging the inductance component in series with a switch, which is closed during a fault condition, enables utilisation of the inductance component only when it is needed to affect the transfer of energy from one DC transmission conduit to another, and so avoids the inductance component adversely impacting on the otherwise normal operation of the power converter.

In another preferred embodiment of the invention each transfer limb portion includes a valve in the form of a transfer valve that selectively allows current to flow therethrough in a first direction while at all times allowing current to flow therethrough in a second direction opposite the first direction.

Each transfer limb portion may include a valve in the form of a transfer valve that selectively allows current to flow therethrough in both a first direction while also only selectively allowing current to flow therethrough in a second direction opposite the first direction.

The foregoing arrangements provide each transfer valve with the desired functionality in a cost effective and compact manner.

There now follows a brief description of preferred embodiments of the invention, by way of non-limiting example, with reference being made to the following figures in which:
Figure 1 shows a schematic view of a HVDC power converter according to a first embodiment of the invention;
Figure 2 shows a schematic view of a chain-link converter which forms a part of the power converter shown in Figure 1;
Figure 3 shows an enlarged schematic view of a portion of the power converter shown in Figure 1;
Figure 4 illustrates changes in the voltage carried by first and second DC transmission conduits of a DC network connected in use to the power converter shown in Figure 1, while the power converter is being operated in a conduit energy transfer mode, along with corresponding changes to the current flowing through the said DC transmission conduits and the power converter;
Figure 5(a) shows a schematic view of respective transfer limb portions within the power converter shown in Figure 1 in a first operating cycle of the conduit energy transfer mode; and
Figure 5(b) shows a schematic view of the transfer limb portions shown in Figure 4(a) in a second operating cycle of the conduit energy transfer mode.

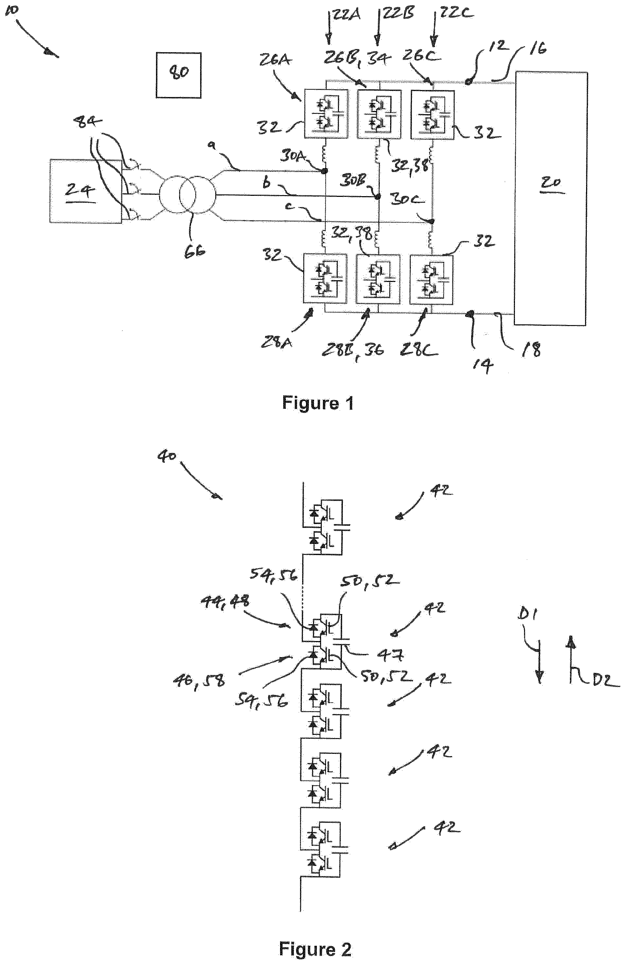

A HVDC power converter according to an embodiment of the invention is designated generally by reference numeral 10, as shown in Figure 1.

The power converter 10 has first and second DC terminals 12, 14 which, in use, are connected to corresponding first and second DC transmission conduits 16, 18 of a DC network 20. In the embodiment shown, the first and second DC terminals 12, 14 are connected to first and second DC transmission conduits 16, 18 in the form of respective overhead lines, although in other embodiments of the invention the first and second DC terminals 12, 14 may instead be connected to other forms of DC transmission conduit, such as undersea cables.

The power converter 10 includes three converter limbs 22A, 22B, 22C each of which is associated with a respective phase a, b, c of a three-phase AC network 24 with which the power converter 10 is, in use, connected.

More particularly, in the embodiment shown, each converter limb 22A, 22B, 22C extends between the first and second DC terminals 12, 14 and includes first and second limb portions 26A, 28A, 26B, 28B, 26C, 28C that are separated by a respective corresponding AC terminal 30A, 30B, 30C, with each AC terminal 30A, 30B, 30C being connected, in use, to a respective phase a, b, c of the aforementioned AC network 24. More particularly still, each first limb portion 26A, 26B, 26C extends between the first DC terminal 12 and the corresponding AC terminal 30A, 30B, 30C while each second limb portion 28A, 28B, 28C extends between the second DC terminal 14 and the corresponding AC terminal 30A, 30B, 30C.

Power converters according to other embodiments of the invention may be configured to handle fewer than or more than three phases and hence may have a fewer or greater number of corresponding converter limbs.

Returning to the power converter 10 shown in Figure 1, the limb portions 26A, 28A, 26B, 28B, 26C, 28C each include respective valves 32 that operate in cooperation with one another during normal use of the power converter 10 to transfer power between the DC and AC networks 20, 24.

One first limb portion 26B is designated as a first transfer limb portion 34 and one second limb portion 28B is designated as a second transfer limb portion 36, whereby each respective valve 32 therein is in the form of a transfer valve 38 that selectively allows current to flow therethrough in a first direction D1 while at all times allowing current to flow therethrough in a second direction D2 opposite the first direction D1.

In the embodiment shown, the first and second transfer limb portions 34, 36 lie within the same converter limb 22B, although this need not necessarily be the case in other embodiments of the invention, i.e. the first transfer limb portion may lie in one converter limb while the second transfer limb portion lies in a different converter limb. Similarly, in still further embodiments of the invention multiple first limb portions may each be designated as a first transfer limb portion, and/or multiple second limb portions may each be designated as a second transfer limb portion.

In any event, returning to the embodiment shown, each valve 32, including the designated transfer valves 38, is defined by a chain-link converter 40 which is formed from a plurality of series connected chain link modules 42, as shown schematically in Figure 2.

Each chain link module 42 includes first and second individual switching elements 44, 46 that are electrically connected with an energy storage device 47, and more particularly are connected with the energy storage device 47 in a known half-bridge arrangement. The energy storage device 47 preferably is a capacitor.

Meanwhile, the first individual switching element 44 is a first active switching element and passive current check element pair 48, with the active switching element 50 taking the form of a semiconductor switch 52 and the passive current check element 54 taking the form of an anti-parallel diode 56 connected in parallel with the said semiconductor switch 52, while the second individual switching element 46 is a second active switching element and passive current check element pair 58, with the active switching element 50 again taking the form of a semiconductor switch 52 and the passive current check element 54 again taking the form of an anti-parallel diode 56 connected in parallel with the said semiconductor switch 52.

In both instances, the semiconductor switch 52 preferably is an insulated-gate bipolar transistor (IGBT), although in other embodiments of the invention it might instead be a thyristor, a Light-Triggered Thyristor (LTT), a Gate Turn-Off thyristor (GTO), a Gate Commutated Thyristor (GCT) or an Integrated Gate Commutated Thyristor (IGCT), or a series-connected string of such switches.

The second active switching element and passive current check element pair 58, in each chain link module 42 of the chain-link converter 40 within each transfer valve 38, is configured within the corresponding chain link module 42 to selectively allow current to flow through the respective chain link module 42 in the first direction D1, while at all times allowing current to flow through the respective chain link module 42 in the second direction D2. Hence, the plurality of second active switching element and passive current check element pairs 58 within the chain-link converter 40 of each transfer valve 38 are able to combine to selectively allow current to flow through the corresponding transfer valve 38 in the first direction D1, while at all times allowing current to flow through the corresponding transfer valve 38 in the second direction D2.

In other embodiments of the invention, not shown, each transfer limb portion may include a valve in the form of a transfer valve that selectively allows current to flow therethrough in both a first direction while also only selectively allowing current to flow therethrough in a second direction opposite the first direction. Such transfer valves preferably are formed from a plurality of chain link modules, similar to those described hereinabove, but instead including additional individual switching elements which are connected with an energy storage device, e.g. a capacitor, in a known full bridge arrangement.

In addition to the foregoing, the power converter 10 includes a transfer inductor 60 that is electrically connected between the transfer limb portions 34, 36 and ground 62. Other embodiments of the invention, now shown, may include more than one transfer inductor, so connected between the transfer limb portions and ground.

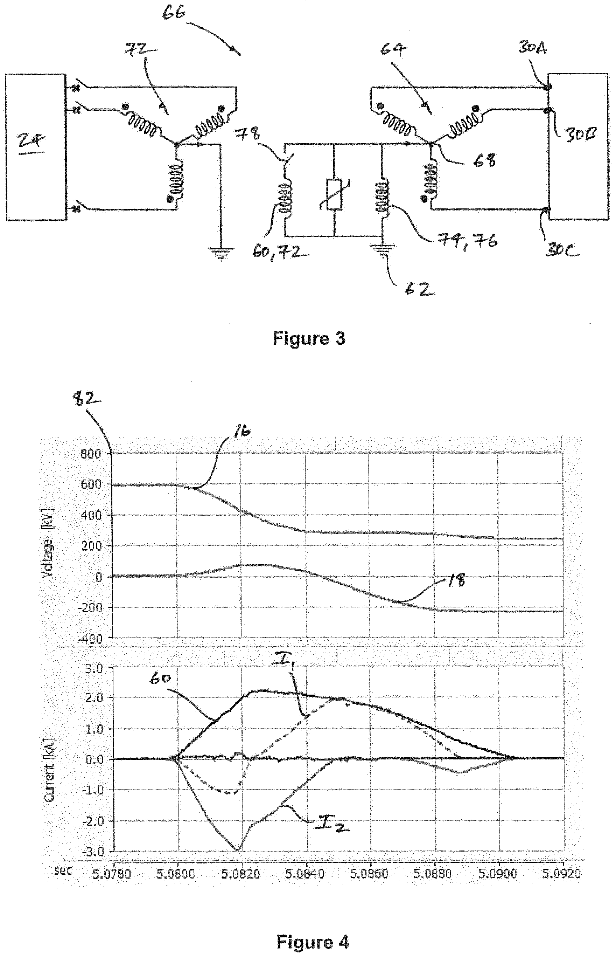

In the particular embodiment shown, each AC terminal 30A, 30B, 30C is connected to a first transformer winding 64 of a transformer 66 that is configured, in use, to connect the power converter 10 to the AC network 24, and the transfer inductor 60 extends between a neutral point 68 of the first transformer winding 64 and ground 62, as shown in Figure 3. The transformer 66 is a star-star connected transformer in which the first transformer winding 64 has a star arrangement and a second transformer winding 70 similarly has a star arrangement, although in other embodiments of the invention the transformer may have a different configuration, and the or each transfer inductor may correspondingly be connected in a different manner.

Returning to the embodiment shown, the transfer inductor 60 takes the form of a dedicated inductance component 72 which is solely configured to, in use while the power converter is operated in the conduit energy transfer mode, handle a transfer of energy between the first and second DC transmission conduits 16, 18.

In other embodiments of the invention, the transfer inductor 60 may instead be formed by an existing ground reactor 74, such a star-point reactor 76 which ordinarily forms a part of a star-star connected transformer.

In the embodiment shown, the dedicated inductance component 72 is arranged in series with a switch 78, which is preferably a further semiconductor switch or, more preferably still, a cost-effective fast mechanical switch.

The power converter 10 additionally includes a control unit 80 that is programmed, in use, to operate the power converter 10 in a conduit energy transfer mode. In the particular embodiment of the invention described, the control unit 80 is programmed to operate the power converter 10 in such a transfer mode following a fault condition in which the voltage carried by one DC transmission conduit 16, 18 reduces while the voltage carried by the other DC transmission conduit increases 16, 18.

For example, when the power converter 10 is connected with a first DC transmission conduit 16 that is carrying +300 kV and a second DC transmission conduit 18 that is carrying -300 kV, and the second DC transmission conduit 18 experiences a short-circuit fault 82, the voltage carried by the first DC transmission conduit 16 will increase to approximately +584 kV while the voltage carried by the second DC transmission conduit 18 reduces to approximately 0.4 kV, as shown in Figure 4.

Following such a fault condition, the control unit 80 operates the power converter 10 in the conduit energy transfer mode, and more particularly is programmed to initially block each valve 32 to prevent the transfer of power between the DC and AC networks 20, 24. In practice this means the control unit 80 is programmed to turn off each semiconductor switch 52 in each chain link module 42 of each chain-link converter 40 in each valve 32.

Any AC circuit breaker 84 which might be operable to protect the power converter 10, e.g. by isolating it from other power converters within a power transmission network, is also operated to provide such protection.

The control unit 80 is additionally programmed to close the switch 78 to place the inductance component 72, i.e. the transfer inductor 60, in circuit between the transfer limb portions 34, 36 and ground 62.

Thereafter, the control unit 80 is programmed to direct current to flow during a first operating cycle from a DC terminal 12, 14 connected in use with the DC transmission conduit 16, 18 carrying a higher voltage, i.e. from the first DC terminal 12 connected with the first DC transmission conduit 16 which is now carrying the increased voltage, to the transfer inductor 60, via the corresponding first transfer limb portion 34.

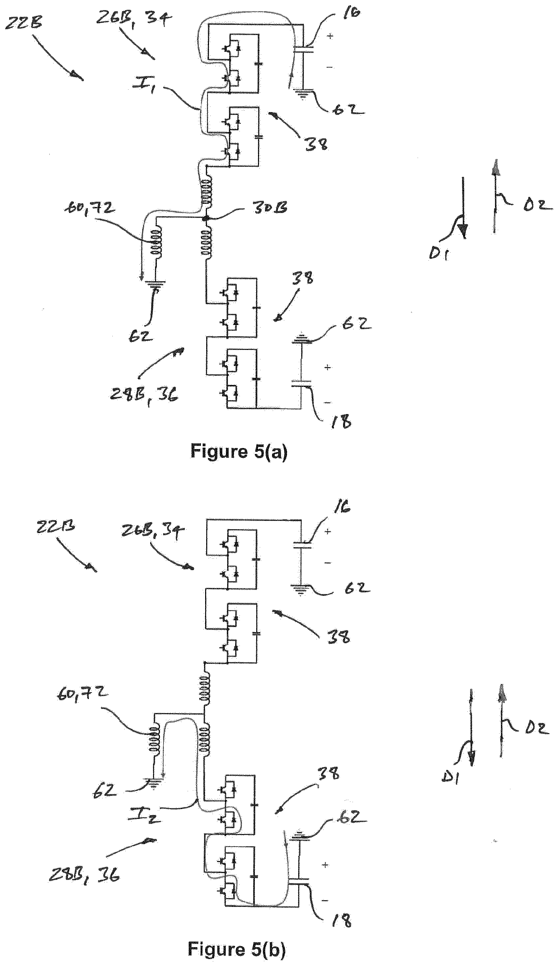

In practice, as shown in Figure 5(a), this means the control unit 80 is programmed to close the semiconductor switch 52 in each second active switching element and passive current check element pair 58 in each chain link module 42 of the chain-link converter 40 in the transfer valve 38 within the first transfer limb portion 34, so that a first current I₁ is able to flow in the first direction D1 from the first DC transmission conduit 16 (which is depicted as a capacitance in Figure 5(a)) to the transfer inductor 60, whereby energy is transferred from the first DC transmission conduit 16 to the transfer inductor 60.

The control unit 80 is programmed to then direct current to flow during a second operating cycle from the transfer inductor 60 to the DC terminal 12, 14 connected in use with the DC transmission conduit 16, 18 carrying a lower voltage, i.e. to the second DC terminal 14 connect with the second DC transmission conduit 18 which is now carrying the reduced voltage, via the corresponding second transfer limb portion 36.

In practice, as shown in Figure 5(b), this means the control unit 80 is programmed to open the semiconductor switch 52 in each second active switching element and passive current check element pair 58 in each chain link module 42 of the chain-link converter 40 in the transfer valve 38 within the first transfer limb portion 34. Such prevention of the flow of first current I₁ thereby allows a transfer of energy to take place from the transfer inductor 60 to the second DC transmission conduit 18 (which is again depicted as a capacitance in Figure 5(b)), via a flow of second current I₂ in the second direction D2 through the transfer valve 38 in the second transfer limb portion 36 that extends between the second DC terminal 14 connected with the second DC transmission conduit 18 now carrying the reduced voltage, and the transfer inductor 60.

In addition, the control unit 80 may be programmed, when operating the power converter 10 in the conduit energy transfer mode, to repeat the first and second operating cycles. In one instance this may be to repeatedly transfer energy from the first DC transmission conduit 16 to the transfer inductor 60, and from the transfer inductor 60 to the second DC transmission conduit 18. In a second instance it may be to selectively transfer energy in both directions, i.e. from the first DC transmission conduit 16 to the second DC transmission conduit 18, and then in the opposite direction, i.e. from the second DC transmission conduit 18 to the first DC transmission conduit 16.

In the embodiment shown, a transfer of energy from the first DC transmission conduit 16 to the second DC transmission conduit 18, via the transfer inductor 60, has the effect of reducing the magnitude of voltage carried by the first DC transmission conduit 16 from approximately +584 kV to approximately +238 kV, while increasing the magnitude of voltage carried by the second DC transmission conduit 18 from approximately 0.4 kV to approximately -233 kV, as shown in Figure 4.

In other words, following operation of the control unit 80 as set out above, the voltage carried by each of the first and second DC transmission conduits 16, 18 is essentially balanced and close to its respective pre-fault levels of +300 kV and -300 kV, such that the power converter 10 is very close to being able to resume its normal operation.

In situations where the short-circuit fault 82 afflicting the second DC transmission conduit 18 (or indeed the first DC transmission conduit 16, as the case may be) extends for a long duration, the permanency of the fault can be determined by attempting to carry out the aforementioned voltage balancing exercise while monitoring the respective voltage of the first and second DC transmission conduits 16, 18. If the voltage of the first DC transmission conduit 16 decreases, while operating the power converter 10 in the conduit energy transfer mode, but the voltage of the second DC transmission conduit 18 fails to increase correspondingly, then it can be concluded that the fault is a permanent one.

## Claims

1. A HVDC power converter (10) comprising:
first and second DC terminals (12, 14) for connection to corresponding first and second DC transmission conduits (16, 18) of a DC network (20);
at least one converter limb (22A, 22B, 22C), the or each converter limb (22A, 22B, 22C) extending between the first and second DC terminals (12, 14), the or each converter limb (22A, 22B, 22C) including first and second limb portions (26A, 28A, 26B, 28B, 26C, 28C) separated by a respective AC terminal (30A, 30B, 30C), the AC terminal (30A, 30B, 30C) of the or each converter limb (22A, 22B, 22C) being for connection to a respective phase (a, b, c) of an AC network (24), the or each first limb portion (26A, 26B, 26C) extending between the first DC terminal (12) and a corresponding AC terminal (30A, 30B, 30C), the or each second limb portion (28A, 28B, 28C) extending between the second DC terminal (14) and a corresponding AC terminal (30A, 30B, 30C), the limb portions (26A, 28A, 26B, 28B, 26C, 28C) each including respective valves (32) that are configured to operate in cooperation
with one another during normal use of the power converter (10) to transfer power between the DC and AC networks (20, 24), at least one first limb portion (26A, 26B, 26C) being designated as a first transfer limb portion (34) and at least one second limb portion (28A, 28B, 28C) being designated as a second transfer limb portion (36);
at least one transfer inductor (60) electrically connected between the transfer limb portions (34, 36) and ground (62); and
a control unit (80) programmed, while operating the power converter (10) in a conduit energy transfer mode, to control the or each first transfer limb portion (34) and the or each second transfer limb portion (36) to:
(a) direct current to flow during a first operating cycle from the one of the first DC terminal (12) and the second DC terminal (14) connected in use with the DC transmission conduit (16, 18) carrying a higher absolute voltage to one or more transfer inductors (60), via a corresponding one of the or each first transfer limb portion (34) and the or each second transfer limb portion (36), whereby energy is transferred from the DC transmission conduit (16, 18) carrying the absolute higher voltage to the one or more transfer inductors (60); and
(b) direct current to flow during a second operating cycle from the one or more transfer inductors (60) to the one of the first DC terminal (12) and the second DC terminal (14) connected in use with the DC transmission conduit (16, 18) carrying a lower absolute voltage, via a corresponding other of the or each first transfer limb portion (34) and the or each second transfer limb portion (36), whereby energy is transferred from the one or more transfer inductors (60) to the DC transmission conduit (16, 18) carrying the absolute lower voltage;
and wherein the control unit (80) is further programmed, while operating the power converter (10) in the conduit energy transfer mode, to disconnect the power converter (10) from the AC network by operating an AC circuit breaker (84) to prevent the transfer of power between the DC and AC networks (20, 24).

2. A power converter (10) according to Claim 1 wherein the control unit (80) is programmed to operate the power converter (10) in the conduit energy transfer mode following a fault condition in which the voltage carried in use by one DC transmission conduit (16, 18) reduces while the voltage carried by the other DC transmission conduit (16, 18) increases.

3. A power converter (10) according to Claim 2 wherein the control unit (80) is programmed when operating the power converter (10) in the conduit energy transfer mode following a fault conduit to, as a first step, block each valve (32) to prevent the transfer of power between the DC and AC networks (20, 24).

4. A power converter (10) according to any preceding claim wherein the control unit (80) is programmed to repeat the first and second operating cycles.

5. A power converter (10) according to any preceding claim comprising a transformer (66), wherein the or each AC terminal (30A, 30B, 30C) is connected to a first transformer winding (64) of said transformer (66) configured, in use, to connect the power converter (10) to an AC network (24).

6. A power converter (10) according to Claim 5 wherein said transfer inductor (60) extends between a neutral point (68) of the first transformer winding (64) and ground (62).

7. A power converter (10) according to any preceding claim wherein said at least one transfer inductor (60) takes the form of a dedicated inductance component (72) solely configured to in use handle the transfer of energy between respective DC transmission conduits (16, 18).

8. A power converter according to Claim 7 wherein the or each dedicated inductance component (72) is arranged in series with a switch (78), and the control unit (80) is further programmed while operating the power converter (10) in the conduit energy transfer mode to close the or each switch (78) to place the corresponding inductance component (72) in circuit between the transfer limb portions (34, 36) and ground (62).

9. A power converter (10) according to any preceding claim wherein each transfer limb portion (34, 36) includes a valve (32) in the form of a transfer valve (38) that selectively allows current (I₁) to flow therethrough in a first direction (D1) while at all times allowing current (I₂) to flow therethrough in a second direction (D2) opposite the first direction (D1).

10. A power converter (10) according to any of Claims 1 to 8 wherein each transfer limb portion (34, 36) includes a valve (32) in the form of a transfer valve (38) that selectively allows current (I₁) to flow therethrough in both a first direction (D1) while also only selectively allowing current (I₂) to flow therethrough in a second direction (D2) opposite the first direction (D1).

## Patentansprüche

1. Hochspannungs-Gleichstrom-Leistungswandler (10), umfassend:
einen ersten und einen zweiten Gleichstromanschluss (12, 14) zur Verbindung mit einer entsprechenden ersten und einer entsprechenden zweiten Gleichstromübertragungsleitung (16, 18) eines Gleichstromnetzwerks (20);
mindestens einen Wandlerschenkel (22A, 22B, 22C), wobei sich der oder jeder Wandlerschenkel (22A, 22B, 22C) zwischen dem ersten und dem zweiten Gleichstromanschluss (12, 14) erstreckt, wobei der oder jeder Wandlerschenkel (22A, 22B, 22C) einen ersten und einen zweiten Schenkelabschnitt (26A, 28A, 26B, 28B, 26C, 28C) einschließt, die durch einen jeweiligen Wechselstromanschluss (30A, 30B, 30C) getrennt sind, wobei der Wechselstromanschluss (30A, 30B, 30C) des oder jedes Wandlerschenkels (22A, 22B, 22C) zur Verbindung mit einer jeweiligen Phase (a, b, c) eines Wechselstromnetzwerks (24) dient, wobei sich der oder jeder erste Schenkelabschnitt (26A, 26B, 26C) zwischen dem ersten Gleichstromanschluss (12) und einem entsprechenden Wechselstromanschluss (30A, 30B, 30C) erstreckt, wobei sich der oder jeder zweite Schenkelabschnitt (28A, 28B, 28C) zwischen dem zweiten Gleichstromanschluss (14) und einem entsprechenden Wechselstromanschluss (30A, 30B, 30C) erstreckt, wobei die Schenkelabschnitte (26A, 28A, 26B, 28B, 26C, 28C) jeweils jeweilige Ventile (32) einschließen, die so ausgelegt sind, dass sie im Normalgebrauch des Leistungswandlers (10) in Zusammenwirkung miteinander arbeiten, um Leistung zwischen dem Gleichstrom- und dem Wechselstromnetzwerk (20, 24) zu transferieren, wobei mindestens ein erster Schenkelabschnitt (26A, 26B, 26C) als erster Transferschenkelabschnitt (34) bezeichnet wird, und mindestens ein zweiter Schenkelabschnitt (28A, 28B, 28C) als zweiter Transferschenkelabschnitt (36) bezeichnet wird;
mindestens einen Transferinduktor (60), der elektrisch zwischen die Transferschenkelabschnitte (34, 36) und Masse (62) geschaltet ist; und
eine Steuereinheit (80), die so programmiert ist, dass sie, während sie den Leistungswandler (10) in einem Leitungsenergietransfermodus betreibt, den oder jeden ersten Transferschenkelabschnitt (34) und den oder jeden zweiten Transferschenkelabschnitt (36) so steuert, dass:
(a) Strom so gelenkt wird, dass er während eines ersten Betriebszyklus von demjenigen aus dem ersten Gleichstromanschluss (12) und dem zweiten Gleichstromanschluss (14), der im Gebrauch mit der Gleichstromübertragungsleitung (16, 18) verbunden ist, die eine höhere absolute Spannung führt, über einen entsprechenden aus dem oder jedem ersten Transferschenkelabschnitt (34) und dem oder jedem zweiten Transferschenkelabschnitt (36) zu einem oder mehreren Transferinduktoren (60) fließt, wodurch Energie von der Gleichstromübertragungsleitung (16, 18), die die absolut höhere Spannung führt, zu dem einen oder den mehreren Transferinduktoren (60) transferiert wird; und
(b) Strom so gelenkt wird, dass er während eines zweiten Betriebszyklus von dem einen oder den mehreren Transferinduktoren (60) über einen entsprechenden anderen aus dem oder jedem ersten Transferschenkelabschnitt (34) und dem oder jedem zweiten Transferschenkelabschnitt (36) zu demjenigen aus dem ersten Gleichstromanschluss (12) und dem zweiten Gleichstromanschluss (14) fließt, der im Gebrauch mit der Gleichstromübertragungsleitung (16, 18) verbunden ist, die eine niedrigere absolute Spannung führt, wodurch Energie von dem einen oder den mehreren Transferinduktoren (60) zu der Gleichstromübertragungsleitung (16, 18) transferiert wird, die die absolut niedrigere Spannung führt;
und wobei die Steuereinheit (80) weiter so programmiert ist, dass sie, während sie den Leistungswandler (10) im Leitungsenergietransfermodus betreibt, den Leistungswandler (10) vom Wechselstromnetzwerk trennt, indem sie einen Wechselstromschutzschalter (84) betätigt, um den Transfer von Leistung zwischen dem Gleichstrom- und dem Wechselstromnetzwerk (20, 24) zu verhindern.

2. Leistungswandler (10) nach Anspruch 1, wobei die Steuereinheit (80) so programmiert ist, dass sie den Leistungswandler (10) im Anschluss an einen Fehlerzustand, bei dem die im Gebrauch von einer Gleichstromübertragungsleitung (16, 18) geführte Spannung abnimmt, während die von der anderen Gleichstromübertragungsleitung (16, 18) geführte Spannung zunimmt, im Leitungsenergietransfermodus betreibt.

3. Leistungswandler (10) nach Anspruch 2, wobei die Steuereinheit (80) so programmiert ist, dass sie, wenn sie den Leistungswandler (10) im Anschluss an eine Fehlerleitung im Leitungsenergietransfermodus betreibt, als ersten Schritt jedes Ventil (32) sperrt, um den Transfer von Leistung zwischen dem Gleichstrom- und dem Wechselstromnetzwerk (20, 24) zu verhindern.

4. Leistungswandler (10) nach einem vorstehenden Anspruch, wobei die Steuereinheit (80) so programmiert ist, dass sie den ersten und den zweiten Betriebszyklus wiederholt.

5. Leistungswandler (10) nach einem vorstehenden Anspruch, der einen Transformator (66) umfasst, wobei der oder jeder Wechselstromanschluss (30A, 30B, 30C) mit einer ersten Transformatorwicklung (64) des Transformators (66) verbunden ist, der so ausgelegt ist, dass er im Gebrauch den Leistungswandler (10) mit einem Wechselstromnetzwerk (24) verbindet.

6. Leistungswandler (10) nach Anspruch 5, wobei sich der Transferinduktor (60) zwischen einem Nullpunkt (68) der ersten Transformatorwicklung (64) und Masse (62) erstreckt.

7. Leistungswandler (10) nach einem vorstehenden Anspruch, wobei der mindestens eine
Transferinduktor (60) die Form eines dedizierten induktiven Bauelements (72) annimmt, das ausschließlich dafür ausgelegt ist, im Gebrauch den Transfer von Energie zwischen jeweiligen Gleichstromübertragungsleitungen (16, 18) handzuhaben.

8. Leistungswandler nach Anspruch 7, wobei das oder jedes dedizierte induktive Bauelement (72) mit einem Schalter (78) in Reihe geschaltet ist, und die Steuereinheit (80) weiter so programmiert ist, dass sie, während sie den Leistungswandler (10) im Leitungsenergietransfermodus betreibt, den oder jeden Schalter (78) schließt, um das entsprechende induktive Bauelement (72) zwischen die Transferschenkelabschnitte (34, 36) und Masse (62) zu schalten.

9. Leistungswandler (10) nach einem vorstehenden Anspruch, wobei jeder Transferschenkelabschnitt (34, 36) ein Ventil (32) in Form eines Transferventils (38) einschließt, das selektiv ermöglicht, dass Strom (I₁) in einer ersten Richtung (D1) durch es hindurchfließt, während es jederzeit ermöglicht, dass Strom (I2) in einer zweiten Richtung (D2), die der ersten Richtung (D1) entgegengesetzt ist, durch es hindurchfließt.

10. Leistungswandler (10) nach einem der Ansprüche 1 bis 8, wobei jeder Transferschenkelabschnitt (34, 36) ein Ventil (32) in Form eines Transferventils (38) einschließt, das selektiv ermöglicht, dass Strom (I₁) in sowohl einer ersten Richtung (D1) durch es hindurchfließt, während es ebenfalls nur selektiv ermöglicht, dass Strom (I2) in einer zweiten Richtung (D2), die der ersten Richtung (D1) entgegengesetzt ist, durch es hindurchfließt.

## Revendications

1. Convertisseur de puissance CCHT (10) comprenant :
des première et seconde bornes CC (12, 14) pour un raccordement à des première et seconde conduites de transmission CC correspondantes (16, 18) d'un réseau CC (20) ;
au moins un bras de convertisseur (22A, 22B, 22C), le ou chaque bras de convertisseur (22A, 22B, 22C) s'étendant entre les première et seconde bornes CC (12, 14), le ou chaque bras de convertisseur (22A, 22B, 22C) incluant des première et seconde parties de bras (26A, 28A, 26B, 28B, 26C, 28C) séparées par une borne CA respective (30A, 30B, 30C), la borne CA (30A, 30B, 30C) du ou de chaque bras de convertisseur (22A, 22B, 22C) étant destinée à un raccordement à une phase respective (a, b, c) d'un réseau CA (24), la ou chaque première partie de bras (26A, 26B, 26C) s'étendant entre la première borne CC (12) et une borne CA correspondante (30A, 30B, 30C), la ou chaque seconde partie de bras (28A, 28B, 28C) s'étendant entre la seconde borne CC (14) et une borne CA correspondante (30A, 30B, 30C), les parties de bras (26A, 28A, 26B, 28B, 26C, 28C) incluant chacune des soupapes respectives (32) qui sont configurées pour fonctionner en coopération les unes avec les autres durant une utilisation normale du convertisseur de puissance (10) pour transférer de la puissance entre les réseaux CC et CA (20, 24), au moins une première partie de bras (26A, 26B, 26C) étant désignée comme une première partie de bras de transfert (34) et au moins une seconde partie de bras (28A, 28B, 28C) étant désignée comme une seconde partie de bras de transfert (36) ;
au moins un inducteur de transfert (60) électriquement raccordé entre les parties de bras de transfert (34, 36) et la terre (62) ; et
une unité de commande (80) programmée, tout en faisant fonctionner le convertisseur de puissance (10) dans un mode de transfert d'énergie de conduite, pour commander la ou chaque première partie de bras de transfert (34) et la ou chaque seconde partie de bras de transfert (36) pour :
(a) diriger du courant pour circuler durant un premier cycle de fonctionnement à partir de la une de la première borne CC (12) et de la seconde borne CC (14) raccordée en utilisation avec la conduite de transmission CC (16, 18) acheminant une tension absolue supérieure vers un ou plusieurs inducteurs de transfert (60), par l'intermédiaire d'une correspondante de la ou de chaque première partie de bras de transfert (34) et de la ou de chaque seconde partie de bras de transfert (36), selon lequel de l'énergie est transférée depuis la conduite de transmission CC (16, 18) acheminant la tension absolue supérieure vers les un ou plusieurs inducteurs de transfert (60) ; et
(b) diriger du courant pour circuler durant un second cycle de fonctionnement à partir des un ou plusieurs inducteurs de transfert (60) vers la une de la première borne CC (12) et de la seconde borne CC (14) raccordée en utilisation avec la conduite de transmission CC (16, 18) acheminant une tension absolue inférieure, par l'intermédiaire d'une autre correspondante de la ou de chaque première partie de bras de transfert (34) et de la ou de chaque seconde partie de bras de transfert (36), selon lequel de l'énergie est transférée depuis les un ou plusieurs inducteurs de transfert (60) vers la conduite de transmission CC (16, 18) acheminant la tension absolue inférieure ;
et dans lequel l'unité de commande (80) est en outre programmée, tout en faisant fonctionner le convertisseur de puissance (10) dans le mode de transfert d'énergie de conduite, pour déconnecter le convertisseur de puissance (10) du réseau CA en faisant fonctionner un disjoncteur CA (84) pour empêcher le transfert de puissance entre les réseaux CC et CA (20, 24).

2. Convertisseur de puissance (10) selon la revendication 1, dans lequel l'unité de commande (80) est programmée pour faire fonctionner le convertisseur de puissance (10) dans le mode de transfert d'énergie de conduite après un état de panne dans lequel la tension acheminée en utilisation par une conduite de transmission CC (16, 18) diminue tandis que la tension acheminée par l'autre conduite de transmission CC (16, 18) augmente.

3. Convertisseur de puissance (10) selon la revendication 2, dans lequel l'unité de commande (80) est programmée lors du fonctionnement du convertisseur de puissance (10) dans le mode de transfert d'énergie de conduite après une conduite défaillante pour, comme une première étape, bloquer chaque soupape (32) pour empêcher le transfert de puissance entre les réseaux CC et CA (20, 24).

4. Convertisseur de puissance (10) selon une quelconque revendication précédente, dans lequel l'unité de commande (80) est programmée pour répéter les premier et second cycles de fonctionnement.

5. Convertisseur de puissance (10) selon une quelconque revendication précédente, comprenant un transformateur (66), dans lequel la ou chaque borne CA (30A, 30B, 30C) est raccordée à un premier enroulement de transformateur (64) dudit transformateur (66) configuré, en utilisation, pour raccorder le convertisseur de puissance (10) à un réseau CA (24).

6. Convertisseur de puissance (10) selon la revendication 5, dans lequel ledit inducteur de transfert (60) s'étend entre un point neutre (68) du premier enroulement de transformateur (64) et la terre (62).

7. Convertisseur de puissance (10) selon une quelconque revendication précédente, dans lequel ledit au moins un inducteur de transfert (60) prend la forme d'un composant d'inductance dédié (72) uniquement configuré pour, en utilisation, traiter le transfert d'énergie entre des conduites de transmission CC respectives (16, 18).

8. Convertisseur de puissance selon la revendication 7, dans lequel le ou chaque composant d'inductance dédié (72) est agencé en série avec un commutateur (78), et l'unité de commande (80) est en outre programmée, tout en faisant fonctionner le convertisseur de puissance (10) dans le mode de transfert d'énergie de conduite, pour fermer le ou chaque commutateur (78) pour placer le composant d'inductance correspondant (72) en circuit entre les parties de bras de transfert (34, 36) et la terre (62).

9. Convertisseur de puissance (10) selon une quelconque revendication précédente, dans lequel chaque partie de bras de transfert (34, 36) inclut une soupape (32) sous la forme d'une soupape de transfert (38) qui permet sélectivement à du courant (I₁) de circuler à travers celle-ci dans une première direction (D1) tout en permettant à tout moment à du courant (I2) de circuler à travers celle-ci dans une seconde direction (D2) opposée à la première direction (D1).

10. Convertisseur de puissance (10) selon l'une quelconque des revendications 1 à 8, dans lequel chaque partie de bras de transfert (34, 36) inclut une soupape (32) sous la forme d'une soupape de transfert (38) qui permet sélectivement à du courant (I₁) de circuler à travers celle-ci à la fois dans une première direction (D1) tout en permettant également uniquement sélectivement à du courant (I2) de circuler à travers celle-ci dans une seconde direction (D2) opposée à la première direction (D1).
